# FASCICULE DE BREVET EUROPEEN

(11) **EP 1 116 607 B1**
(45) Date de publication et mention de la délivrance du brevet: **19.11.2008**
(21) Numéro de dépôt: 01100661.6
(22) Date de dépôt: 11.01.2001
(51) Int. Cl.: B60C 17/06, C08L 21/00

(54) **Composition de caoutchouc utilisable à l'état vulcanisé comme appui de sécurité pour pneumatique et un tel appui**
Im vulkanisierten Zustand als Notlaufring für Reifen geeignete Kautschukzusammensetzung und solch ein Notlaufring
Rubber composition suitable in vulcanised state as safety support for tyre and such a support

(30) Priorité: 12.01.2000 FR 0000427
(43) Date de publication de la demande: 18.07.2001
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Masson, Francois, Greenville, South Carolina 29607 (US); Bataille, Francois, 63450 St-Amand-Tallende (FR); Teisseyre, Serge, 63100 Clermont-Ferrand (FR)
(74) Mandataire: Le Cam, Véronique Marie Christine

(56) Documents cités:
- EP-A- 0 824 131
- GB-A- 822 621
- GB-A- 844 958
- US-A- 5 891 279

## Description

La présente invention concerne une composition de caoutchouc, utilisable à l'état vulcanisé comme appui de sécurité destiné à être monté sur une jante de roue à l'intérieur d'une enveloppe de pneumatique, un tel appui pouvant supporter une bande de roulement de ladite enveloppe en cas de chute de pression de gonflage, un procédé de préparation de ladite composition, et un ensemble monté comportant cet appui.

De manière connue, les appuis de sécurité pour pneumatique de véhicule sont destinés à être montés sur une jante à l'intérieur du pneumatique, en vue de pouvoir supporter la bande de roulement de ce pneumatique en cas de perte de pression de gonflage. Ces appuis comportent notamment une base qui est destinée à s'adapter autour de la jante, et un sommet qui est destiné à entrer en contact avec la bande de roulement dans le cas précité et qui laisse une garde par rapport à celle-ci à la pression nominale.

Le document de brevet japonais JP-A-3/82601 présente un tel appui, dont la base et le sommet sont sensiblement cylindriques, et qui comporte en outre un corps annulaire reliant ladite base et ledit sommet.

Ce corps annulaire comporte un élément de support qui est continu circonférentiellement, et qui comprend:
- une pluralité de cloisons s'étendant axialement de part et d'autre dudit plan médian circonférentiel et réparties sur la circonférence dudit appui, et
- des éléments de jonction s'étendant sensiblement circonférentiellement, chaque élément de jonction reliant entre elles les deux extrémités respectives de deux cloisons adjacentes qui sont disposées d'un même côté de l'appui, lesdits éléments de jonction étant disposés successivement de façon alternée de part et d'autre desdites cloisons;
dans lequel les cloisons et éléments de jonction sont sensiblement rectilignes et la différence entre les valeurs maximale et minimale de l'aire d'une section axiale de l'élément de support en fonction de l'azimut, rapportée à la somme de ces mêmes aires est de préférence inférieure à 0,3. En conséquence, en fonction de l'azimut, l'aire d'une section axiale de l'élément de support varie au maximum d'un facteur deux pour procurer une bonne uniformité de capacité de charge et limiter les vibrations lors d'un roulage en appui.

Cet appui est réalisé essentiellement avec un matériau polymérique dur et l'ensemble de l'élément de support est conçu pour pouvoir supporter la charge en compression.

De tels appuis peuvent être réalisés de façon usuelle par injection dans un moule, par exemple.

On connaît par ailleurs, par exemple par le document de brevet américain US-A-5 023 301, des compositions de caoutchouc vulcanisées qui sont destinées à constituer une partie d'enveloppe de pneumatique et qui présentent des caractéristiques de rigidité améliorées. Les compositions décrites dans ce document comprennent notamment une matrice élastomère dans laquelle sont dispersées d'une manière aléatoire des fibrilles de polypropylène dont la longueur n'excède pas 15 µm, et une charge renforçante.

Un inconvénient majeur de ces compositions réside dans leur résistance réduite à la rupture sous allongement, par rapport à une composition « témoin » dépourvue de ces fibrilles de polypropylène (le module d'allongement maximal à la rupture est inférieur au tiers du module correspondant de ladite composition « témoin »). Ces compositions ne sont pas adaptées pour constituer des appuis de sécurité.

Le but de la présente invention est de proposer une composition de caoutchouc, utilisable à l'état vulcanisé comme appui de sécurité destiné à être monté sur une jante de roue à l'intérieur d'une enveloppe de pneumatique, ladite composition comportant au moins un élastomère diénique, qui soit telle que pour ledit appui, la performance d'allégement, à durée de vie en roulage à plat comparable, soit encore améliorée.

A cet effet, une composition de caoutchouc selon l'invention est telle qu'elle comporte également (pce: parties en poids pour 100 parties d'élastomère(s) diénique(s)):
- 5 à 30 pce de particules d'un polymère thermoplastique α-oléfinique dont la température de fusion est égale ou supérieure à 150° C, la taille moyenne pondérale desdites particules étant comprise entre 30 µm et 500 µm.
- plus de 60 pce de charge renforçante, et
- de 3 à 8 pce de soufre.

On notera que l'invention concerne aussi bien les compositions de caoutchouc à l'état non vulcanisé qu'à l'état vulcanisé.

Concernant ledit ou lesdits élastomères, on entend de manière connue par élastomère diénique un élastomère issu au moins en partie (i.e. un homopolymère ou un copolymère) de monomères diènes (monomères porteurs de deux doubles liaisons carbone-carbone, conjuguées ou non).

A titre préférentiel, on notera que ledit ou lesdits élastomères sont constitués d'au moins un élastomère diénique essentiellement insaturé.

On entend par élastomère diénique essentiellement insaturé un élastomère diénique qui est issu au moins en partie de monomères diènes conjugués ayant un taux de motifs ou unités d'origine diénique (diènes conjugués) qui est supérieur à 15 % (% en moles), et par exemple:
a) tout homopolymère obtenu par polymérisation d'un monomère diène conjugué, tel que le 1, 3-butadiène, le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène.
b) tout copolymère obtenu par copolymérisation d'un ou plusieurs diènes conjugués entre eux ou avec un ou plusieurs composés vinylaromatiques, tels que le styrène, l'ortho-, para-, ou le meta-méthylstyrène. On peut par exemple citer les copolymères de butadiène-styrène, ou les copolymères de butadiène-isoprène.

Selon un exemple de réalisation de l'invention, ladite composition comprend un seul élastomère diénique qui est entièrement constitué de caoutchouc naturel ou de polyisoprène synthétique.

Selon une variante de réalisation de l'invention, ladite composition comprend un coupage:
- selon une quantité égale ou supérieure à 60 pce, de caoutchouc naturel ou de polyisoprène synthétique, et
- selon une quantité inférieure ou égale à 40 pce, d'un homopolymère obtenu par polymérisation d'un monomère diène conjugué ayant de 4 à 12 atomes de carbone, ou d'un copolymère obtenu par copolymérisation d'un où plusieurs diènes conjugués entre eux ou avec un ou plusieurs composés vinylaromatiques ayant de 8 à 20 atomes de carbone.

Ladite composition peut alors comprendre, par exemple, un coupage d'environ 60 pce de caoutchouc naturel et d'environ 40 pce de polybutadiène.

L'état de la technique relatif aux compositions de caoutchouc en tant que telles est notamment constitué par le document GB-A-844 858 cité dans le rapport de recherche européenne. Ce document ne décrit nullement une composition de caoutchouc à base d'élastomère diénique comportant un taux élevé de charge blanche renforçante telle que silice combiné à une forte teneur en soufre. Les charges blanches décrites dans ce document sont de simples charges inertes ou diluantes. Les taux de soufre y sont conventionnels, toujours inférieurs à 3 pce.

La charge renforçante d'une composition de caoutchouc selon l'invention comprend à titre préférentiel une charge blanche renforçante à titre majoritaire, c'est-à-dire selon une fraction massique supérieure à 50 %.

On entend par charge blanche renforçante une charge blanche capable de renforcer à elle seule, sans autre moyen intermédiaire qu'un agent de liaison charge blanche / élastomère(s) une composition de caoutchouc destinée à la fabrication de pneumatiques, en d'autres termes capable de remplacer dans sa fonction de renforcement une charge conventionnelle de noir de carbone de grade pneumatique.

Une telle charge blanche renforçante peut par exemple être constituée de silice, et elle est avantageusement présente dans ladite composition selon une quantité allant de 60 à 80 pce et, à titre encore plus avantageux, selon une quantité allant de 65 à 75 pce.

A titre de silice susceptible d'être utilisée, conviennent toutes les silices précipitées ou pyrogénées connues de l'homme de l'art, qui présentent une surface BET ou CTAB de valeur supérieure à 100 m²/g, même si les silices précipitées hautement dispersibles sont préférées.

Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles utilisables pour l'invention, on peut citer les silices BV 3370 et BV 3380 de la société Degussa, les silices Zeosil 1165 MP et 1115 MP de la société Rhodia, la silice BXR 160 de la société PPG, ou la silice Zeopol 8745 M de la Société Huber.

De préférence, on utilise une silice dont la valeur de surface BET ou CTAB est comprise entre 110 et 200 m²/g et, à titre encore plus préférentiel, entre 140 et 195 m²/g.

L'état physique de la silice est indifférent, que ce soit sous forme de poudre, de microperles, de granulés, de billes.

Bien entendu, par silice, on entend également des coupages de différentes silices. La silice peut être utilisée seule ou en présence d'autres charges blanches. La valeur de la surface spécifique CTAB est déterminée selon la méthode de la norme NFT 45007 de novembre 1987. La valeur de la surface spécifique BET est déterminée selon la méthode de BRUNAUER, EMMET et TELLER qui est décrite dans "The Journal of the American Chemical Society, vol. 80, p. 309 (1938)", correspondant à la norme NFT 45007 de novembre 1987.

A titre de charge blanche renforçante, on peut également utiliser, à titre non limitatif,
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

La charge renforçante utilisée pour la composition de l'invention peut comprendre du noir de carbone de grade 6 ou de grade 7 à titre minoritaire, c'est-à-dire selon une fraction massique inférieure à 50 %. On peut par exemple utiliser à ce titre les noirs N683 et N772.

Conviennent également, à titre de charge renforçante selon l'invention, des coupages noir de carbone/ silice, ou des noirs de carbone partiellement ou intégralement recouverts de silice.

La composition de caoutchouc selon l'invention comprend en outre de manière classique, lorsque ladite charge renforçante comprend une charge blanche renforçante, un agent de liaison charge blanche renforçante / élastomère(s) (encore appelé agent de couplage), qui a pour fonction d'assurer une liaison (ou couplage) suffisante, de nature chimique et/ou physique, entre ladite charge blanche et ledit ou lesdits élastomères, tout en facilitant la dispersion de cette charge blanche au sein de ce ou ces derniers.

Un tel agent de liaison, au moins bifonctionnel, a par exemple comme formule générale simplifiée « Y-T-X », dans laquelle:
- Y représente un groupe fonctionnel (fonction « Y ») qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
- X représente un groupe fonctionnel (« fonction X ») qui est capable de se lier physiquement et/ou chimiquement à l'élastomère, par exemple par l'intermédiaire d'un atome de soufre;
- T représente un groupe hydrocarboné permettant de relier Y et X.

Ces agents de liaison ne doivent en particulier pas être confondus avec de simples agents de recouvrement de la charge considérée lesquels, de manière connue, peuvent comporter la fonction Y active vis-à-vis de la charge, mais sont dépourvus de la fonction X active vis-à-vis de l'élastomère.

De tels agents de liaison, d'efficacité variable, ont été décrits dans un très grand nombre de documents et sont bien connus de l'homme du métier. On peut utiliser en fait tout agent de liaison connu pour ou susceptible d'assurer efficacement, dans les compositions de caoutchouc diénique utilisables pour la fabrication de pneumatiques, la liaison entre silice et élastomère diénique, tels que par exemple des organosilanes, notamment des alkoxysilanes polysulfurés ou des mercaptosilanes.

On utilise en particulier des alkoxysilanes polysulfurés, tels que décrits par exemple dans les documents de brevet US-A-3 842 111, US-A-3 873 489, US-A-3 978 103, US-A-3 997 581, US-A-4 002 594 ou, plus récemment, US-A-5 580 919, US-A-5 583 245, US-A-5 663 396, US-A-5 684 171, US-A-5 684 172, US-A-5 696 197, qui décrivent en détail de tels composés connus.

Conviennent en particulier pour la composition de l'invention, sans que la définition ci-après soit limitative, des alkoxysilanes polysulfurés dits « symétriques » répondant à la formule générale (I) suivante:

(I) Z - A - Sₙ - A - Z,

dans laquelle:
- n est un entier de 2 à 8 (de préférence de 2 à 5);
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₂-C₄, en particulier le propylène);
- Z répond à l'une des formules ci-après: 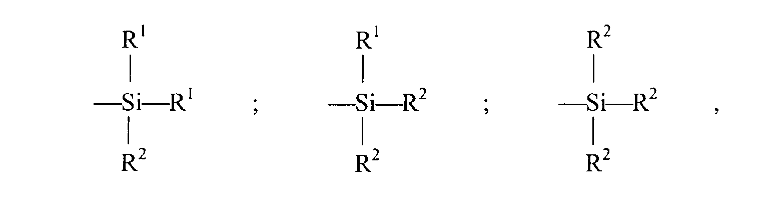 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle);
- les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus particulièrement le méthoxyle et/ou l'éthoxyle.

Dans le cas d'un mélange d'alkoxysilanes polysulfurés répondant à la formule (I) ci-dessus, notamment des mélanges usuels disponibles commercialement, on comprendra que la valeur moyenne des « n » est un nombre fractionnaire, de préférence pouvant varier de 2 à 5.

Comme alkoxysilanes polysulfurés, on citera plus particulièrement les polysulfures (notamment les tétrasulfures) de bis(alkoxyl(C₁-C₄)-silylpropyl), notamment de bis(trialkoxyl(C₁-C₄)-silylpropyl), en particulier les polysulfures de bis(3-triméthoxysilylpropyl) ou de bis(3-triéthoxysilylpropyl). Parmi ces composés, on utilise de préférence le tétrasulfure de bis(3-triéthoxysilylpropyl), en abrégé TESPT, de formule [(C₂H₅O)₃Si(CH₂)₃S₂]₂, commercialisé par exemple par la société Degussa sous la dénomination Si69 (ou X50S lorsqu'il est supporté à 50 % en poids sur du noir de carbone), ou encore par la société Witco sous la dénomination Silquest A1289.

L'homme du métier saura ajuster la teneur en agent de couplage dans les compositions de l'invention, en fonction de l'application visée, du ou des élastomères utilisés et de la quantité de charge blanche renforçante utilisée.

Dans les compositions de caoutchouc conformes à l'invention, la teneur pondérale en agent de couplage peut être comprise dans un domaine de 2 à 15 % par rapport à la masse de charge blanche renforçante et, préférentiellement, dans un domaine de 5 à 12 %.

Concernant le taux de soufre dans la composition selon l'invention, on notera à titre préférentiel qu'il peut varier de 4 à 6 pce.

Les compositions de caoutchouc conformes à l'invention contiennent, outre ledit ou lesdits élastomères, ladite charge renforçante et éventuellement un ou des agents de liaison charge blanche renforçante/ élastomère(s), tout ou partie des autres constituants et additifs habituellement utilisés dans les mélanges de caoutchouc, comme des plastifiants, pigments, antioxydants, des accélérateurs de vulcanisation, des huiles d'extension, un ou des agents de recouvrement de la charge blanche renforçante, tels que des alcoxysilanes, polyols, amines, etc...

Selon un exemple de réalisation de l'invention, ledit polymère α-oléfinique est constitué de polypropylène isotactique.

Selon une autre caractéristique de l'invention, ledit polymère α-oléfinique est dispersé dans ledit ou lesdits élastomères sous forme de particules sensiblement sphériques.

Selon une autre caractéristique de l'invention, ladite composition de caoutchouc présente un module d'élasticité M10 à 10 % de déformation qui est supérieur à 10 MPa et qui est préférentiellement supérieur à 15 MPa. Lorsqu'elle est utilisée comme appui de sécurité, ladite composition présente de préférence un module M10 compris par exemple entre 25 et 35 MPa.

Un procédé de préparation selon la présente invention de ladite composition de caoutchouc vulcanisée est tel qu'il consiste essentiellement,
- dans une première étape de travail thermo-mécanique, en un malaxage dudit ou desdits élastomères, de ladite charge renforçante et dudit polymère α-oléfinique à l'état de poudre, la température de tombée étant d'environ 155° C, puis
- dans une seconde étape de travail mécanique, en une addition d'un système de vulcanisation par le soufre au mélange obtenu au terme de ladite première étape, puis
- dans une troisième étape de vulcanisation, en une cuisson du mélange obtenu au terme de ladite seconde étape,
de telle manière que les températures de mise en oeuvre de ces trois étapes soient toujours inférieures à la température de fusion dudit polymère α-oléfinique, pour que ce dernier soit dispersé dans ledit ou lesdits élastomères sous forme de particules sensiblement sphériques.

Selon un exemple de mise en oeuvre de l'invention, ce procédé de préparation consiste,
- dans ladite première étape, à procéder audit malaxage à une température initiale sensiblement égale à 100° C, puis
- dans ladite seconde étape, à procéder à ladite addition à une température inférieure à 100° C, puis
- dans ladite troisième étape, à procéder à ladite cuisson à une température sensiblement égale à 150° C.

Un appui de sécurité selon l'invention est tel qu'il est constitué par ladite composition de caoutchouc de l'invention.

Cet appui selon l'invention est par exemple du type comportant:
- une base sensiblement cylindrique destinée à s'adapter autour de la jante,
- un sommet sensiblement cylindrique destiné à entrer en contact avec la bande de roulement de l'enveloppe en cas de chute de pression, et laissant une garde par rapport à ladite bande à la pression nominale, et
- un corps annulaire reliant ladite base et ledit sommet entre eux, ledit corps comportant un élément de support continu circonférentiellement avec un plan médian circonférentiel, ledit élément de support comprenant une pluralité de cloisons s'étendant axialement de part et d'autre dudit plan médian circonférentiel et réparties sur la circonférence dudit appui.

Selon un premier mode de réalisation de cet exemple d'appui selon l'invention, ledit corps annulaire comprend également en l'un desdits côtés de l'appui des éléments de jonction s'étendant sensiblement circonférentiellement, chaque élément de jonction reliant entre elles les extrémités respectives de deux cloisons adjacentes qui sont disposées dudit côté de l'appui, lesdits éléments de jonction étant disposés successivement de façon alternée de part et d'autre desdites cloisons.

Dans ce premier mode, lesdits éléments de jonction sont mutuellement épaulés, entre deux cloisons adjacentes, par une nervure s'étendant dudit sommet à ladite base de l'appui, de telle manière que lesdits éléments de jonction forment une paroi de jonction continue en forme de soufflet sur tout ledit côté dudit appui.

Plus précisément, ladite paroi de jonction comporte une pluralité d'alvéoles qui sont chacune délimitées par deux nervures adjacentes, le fond de chaque alvéole présentant sensiblement une forme de dièdre dont l'arête est formée par l'une desdites cloisons et dont les faces sont respectivement formées par lesdits éléments de jonction alternés.

Selon un second mode de réalisation de cet exemple d'appui selon l'invention, ledit corps annulaire comprend également, des deux côtés de l'appui, des éléments de jonction s'étendant sensiblement circonférentiellement, chaque élément de jonction reliant entre elles les deux extrémités respectives de deux cloisons adjacentes qui sont disposées d'un même côté de l'appui, lesdits éléments de jonction étant disposés successivement de façon alternée de part et d'autre desdites cloisons.

Dans ce second mode, lesdites cloisons sont adaptées dans leur partie centrale relativement à leurs extrémités latérales pour renforcer la résistance à un flambement sous un chargement radial du corps annulaire.

En effet, la partie centrale des cloisons de l'élément de support est éloignée des éléments de jonction et peut être détruite en cours de roulage en appui par apparition d'une déformation répétée de flambement. Dans le cas d'appuis réalisés essentiellement avec un matériau élastomérique, une telle déformation répétée de flambement entraîne en roulage une initiation et une propagation de fissures du côté des parois en extension. En revanche, dans le cas des appuis réalisés essentiellement avec des matériaux plastiques, une déformation de flambement entraîne l'apparition de déformations plastiques. Ces déformations irréversibles réduisent de façon importante la raideur de la structure, sa capacité de charge et la rendent progressivement inapte à remplir sa fonction.

Le rapport entre l'épaisseur des cloisons dans leur partie centrale et leurs extrémités latérales est supérieur à 1,1 et de préférence supérieur à 1,5. Cette variation d'épaisseur renforce très sensiblement la résistance au flambement de la partie centrale des cloisons et permet ainsi, à charge radiale donnée, de limiter l'épaisseur des éléments de jonction et d'alléger le poids total de l'appui.

Ces cloisons présentent, d'une extrémité latérale à l'autre, au moins une inversion et, de préférence, trois inversions du sens de leur courbure.

Ces cloisons présentent par exemple une partie centrale s'étendant sensiblement axialement entre deux parties latérales, ces parties latérales rejoignant les éléments de jonction en faisant avec la direction circonférentielle un angle γ allant de 20 à 40 degrés.

Selon un autre exemple de réalisation, les cloisons présentent, dans leur zone centrale, deux parties s'étendant sensiblement axialement et décalées circonférentiellement l'une par rapport à l'autre, ainsi qu'une troisième partie de jonction. La variation α d'orientation moyenne entre cette troisième partie de jonction et les deux parties d'orientation sensiblement axiale est de préférence supérieure à 20 degrés.

Chaque élément de jonction peut être épaulé, d'un seul côté ou des deux côtés de l'élément de support, par au moins une paroi s'étendant sensiblement axialement vers l'extérieur du corps annulaire.

Ces parois axiales sont peu sensibles au flambement car elles sont solidaires de l'élément de support et relativement courtes. Ces parois axiales permettent, à iso-largeur d'appui, de réduire la largeur de l'élément de support et donc d'augmenter sa résistance au flambement.

Dans un mode de réalisation préférentiel, chaque élément de jonction forme avec une paroi axiale qui l'épaule et les extrémités latérales des deux cloisons adjacentes un ensemble en forme d'étoile à trois branches, et la largeur axiale d'une paroi axiale est inférieure ou égale à la moitié de la largeur axiale des deux cloisons adjacentes de l'élément de support.

Les éléments de support selon l'invention peuvent aussi comporter un voile sensiblement cylindrique et coaxial avec l'appui, qui par exemple est disposé radialement à mi-hauteur de l'élément de support.

Ce voile est réalisé dans le même matériau que le reste du corps annulaire. Il permet, lorsqu'il est disposé à mi-hauteur, de diviser par deux la hauteur des cloisons et ainsi d'augmenter d'un facteur quatre, environ, la charge limite de flambement.

Pour faciliter la réalisation des appuis selon l'invention, les différentes géométries des éléments de support sont adaptées pour ne comprendre aucune partie en contre-dépouille s'opposant à un démoulage axial de l'appui.

A titre préférentiel, un ensemble monté selon la présente invention pour véhicule automobile est du type comportant une jante de roue, une enveloppe de pneumatique montée sur ladite jante et ledit appui selon l'invention, ladite jante comportant en chacun de ses deux bords périphériques un siège de jante destiné à recevoir un bourrelet de ladite enveloppe, ladite jante comportant entre ses deux sièges, d'une part, une portée et, d'autre part, une gorge de montage reliant ladite portée à un rebord axialement interne de l'un desdits sièges, ou premier siège.

On notera que la structure plate qui est conférée à ladite jante par ladite portée est telle que, en roulage à plat, toute la largeur de l'appui supporte la charge, contrairement à des jantes dites « creuses ».

Les caractéristiques précitées de la présente invention, ainsi que d'autres, seront mieux comprises à la lecture de la description suivante de plusieurs exemples de réalisation de l'invention, donnés à titre illustratif et non limitatif, en comparaison d'autres exemples non conformes à l'invention.

Les modes de réalisation précités concernant des exemples d'architecture d'appui selon l'invention seront par ailleurs décrits ci-après au moyen des dessins annexés, dans lesquels:
- la Fig. 1 est une vue de côté d'un appui de sécurité selon un exemple de réalisation de l'invention,
- la Fig. 2 est une vue en coupe axiale d'un ensemble monté selon l'invention, dans lequel l'appui de la Fig. 1 est monté sur une jante de roue et se trouve en position d'appui contre une enveloppe de pneumatique,
- la Fig. 3 est une vue en coupe, selon la ligne AA de la Fig. 1, d'un élément de support selon un premier mode de réalisation de l'invention,
- la Fig. 4 est une vue en coupe, selon la ligne AA de la Fig. 1, d'un élément de support selon un second mode de réalisation de l'invention qui comporte des cloisons reliées par des éléments de jonction circonférentiels alternés,
- la Fig. 5, similaire à la Fig. 4, est une vue en coupe, selon la ligne AA de la Fig. 1, d'un élément de support dont les cloisons ont une épaisseur variable,
- la Fig. 6, similaire à la Fig. 4, est une vue en coupe, selon la ligne AA de la Fig. 1, d'un élément de support dont les cloisons comportent une partie centrale de liaison qui est orientée circonférentiellement,
- la Fig. 7, similaire à la Fig. 4, est une vue en coupe, selon la ligne AA de la Fig. 1, d'un élément de support dont les éléments de jonction circonférentiels ont une longueur variable,
- la Fig. 8, similaire à la Fig. 4, est une vue en coupe, selon la ligne AA de la Fig. 1, d'un élément de support dont les cloisons présentent trois inversions de courbure dans leur largeur,
- la Fig. 9, similaire à la Fig.4, est une vue en coupe, selon la ligne AA de la Fig. 1, d'un corps annulaire incluant un autre mode de réalisation d'un élément de support dont les cloisons présentent trois inversions de courbure dans leur largeur,
- les Figs. 10 et 11, similaires à la Fig. 4, sont respectivement des vues en coupe, selon la ligne AA de la Fig. 1, de corps annulaires selon l'invention incluant des éléments de support dont les cloisons ont des épaisseurs variables, et avec des parois axiales d'épaulement,
- la Fig. 12 est une vue de côté d'un appui selon ledit second mode de réalisation de l'invention dont le corps annulaire comprend un voile central, et
- la Fig. 13 est une vue en perspective illustrant une architecture d'appui connue.

Dans ces exemples, on a procédé à des tests de roulage à plat d'appuis selon l'invention et d'appuis « témoin » qui diffèrent les uns des autres, d'une part, par la composition de caoutchouc les constituant et, d'autre part, par l'architecture choisie pour ces appuis.

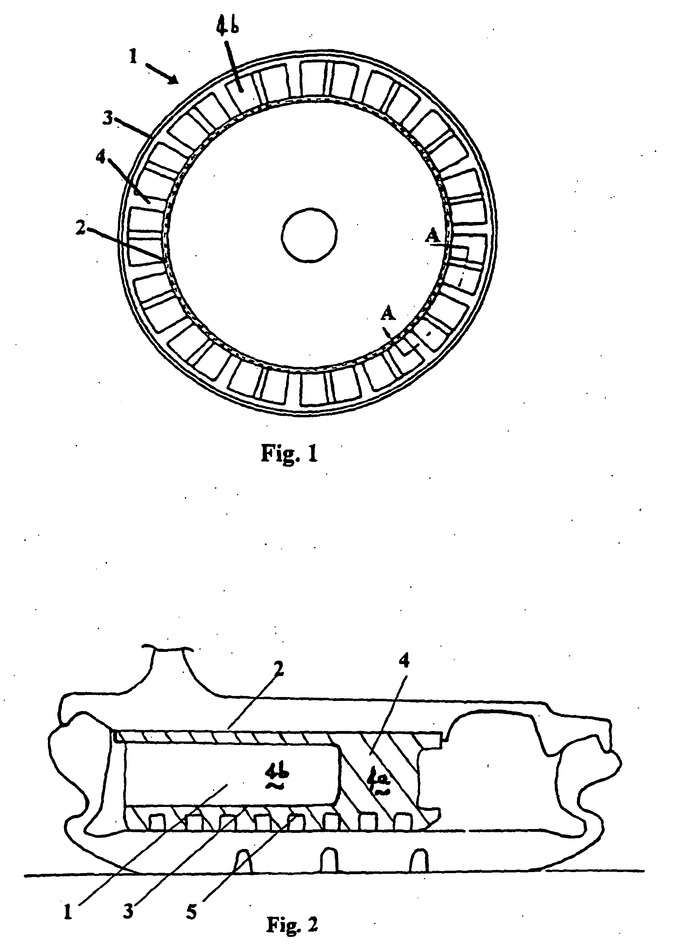

En référence aux Figs. 1 et 2, chacun des appuis 1 testés comprend essentiellement trois parties:
- une base 2, de forme généralement annulaire;
- un sommet 3, sensiblement annulaire, avec sur sa paroi radialement extérieure (de façon optionnelle) des rainures longitudinales 5, et
- un corps annulaire 4 de liaison entre la base 2 et le sommet 3.

La Fig. 2 illustre notamment la fonction d'un appui 1 qui est de supporter la bande de roulement du pneumatique en cas de forte perte de pression de gonflage de celui-ci.

Chacun de ces appuis testés a été intégré à un ensemble monté prévu pour pouvoir équiper un véhicule automobile commercialisé sous la dénomination « PEUGEOT 806 ».

On a utilisé pour la jante de cet ensemble monté une jante telle que celle qui est visible à la Fig. 2, laquelle a été décrite ci-dessus en référence à l'ensemble monté préférentiel de l'invention (cette jante est également décrite en détail dans le document de brevet français FR-A-2 720 977).

Plus précisément, les dimensions caractéristiques de chaque ensemble monté testé (respectivement largeur d'enveloppe- diamètre d'enveloppe - diamètre de jante) sont, en mm:
205 - 650 - 440.

Quant aux dimensions caractéristiques en mm de chaque appui testé (respectivement largeur - diamètre intérieur - hauteur), elles sont de 135 - 440 - 50.

Pour chaque test de roulage à plat (tests témoin et selon l'invention), on a veillé à obtenir un même écrasement relatif de l'appui dans la direction radiale de ce dernier (cet écrasement relatif constant étant défini comme le rapport de la flèche sur la hauteur de l'appui).

Les conditions de roulage étaient les suivantes pour chacun de ces tests:
- charge sur la roue: 530 kg;
- vitesse de roulage: 100 km/h;
- température de roulage: entre 20° C et 25° C.
- roulage sur un circuit de type autoroutier.

### EXEMPLES TEMOIN:

### 1) Exemple témoin 1:

Un premier appui témoin qui a été intégré à l'ensemble monté précité en vue du test de roulage à plat est constitué d'une composition de caoutchouc vulcanisée telle que définie ci-dessous:
- élastomère: caoutchouc naturel 100 pce;
- charge renforçante: silice « ZEOSIL 1165 MP » 54 pce
   (silice commercialisée par la société Rhodia et présentant des valeurs de surfaces BET et CTAB d'au moins 150 à 160 m²/g);
- agent de couplage: « Si69/noir de carbone N330 8,5 pce;
   (dont 4,25 pce de Si69 et 4,25 pce de noir de carbone N330);
- « 6PPD »: 2 pce;
- ZnO: 4 pce;
- acide stéarique: 1 pce;
- accélérateur de vulcanisation: « CBS »: 3 pce;
- soufre: 4,5 pce;
où la « 6PPD » est la N-(1,3-diméthyl butyl)-N'-phényl-p-phénylènediamine, où la « CBS » est la N-cyclohexyl-benzothiazyl-sulfénamide.

Ce premier appui témoin est caractérisé par un module d'élasticité M10 sensiblement égal à 9 MPa (M10 étant l'abréviation usuelle qui désigne un module d'extension sécant obtenu à une déformation de l'ordre de 10 %, à température ambiante et au troisième cycle de sollicitation, selon la norme ISO 37-1977).

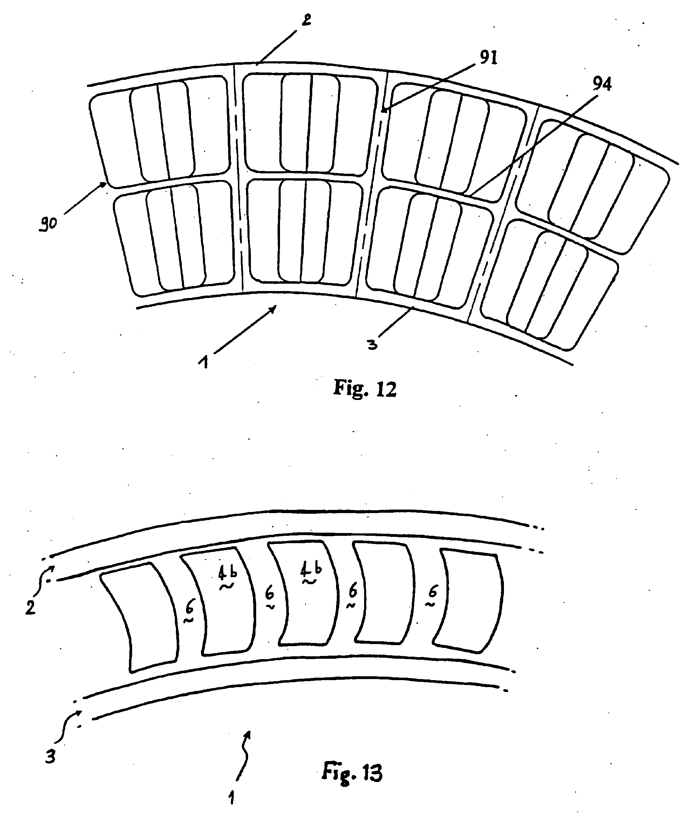

Cet appui présente une architecture connue, qui est illustrée à la Fig. 13, en relation avec les Figs. 1 et 2.

La coupe de la Fig. 2 montre une première partie massive 4a du corps annulaire 4 ainsi qu'une seconde partie 4b constituée d'évidements (voir également Fig. 1) s'étendant axialement sur sensiblement plus de la moitié du corps annulaire 4, en débouchant du côté extérieur dans une direction sensiblement axiale. Ces évidements 4b sont régulièrement répartis sur toute la circonférence du corps annulaire 4 et ils définissent des cloisons 6, lesquelles assurent une liaison radiale directe entre le sommet 2 et la base 3 de l'appui 1.

Cette géométrie a l'avantage de solliciter en flexion et non en compression ces cloisons 6 lorsqu'elles sont écrasées. Les évidements 4b et donc les cloisons 6 sont suffisamment nombreux pour procurer un support régulier lors du roulage sous appui.

Plus précisément, ce premier appui témoin 1 qui a été testé comporte, sur sa circonférence, 38 cloisons 6 qui présentent chacune une épaisseur de 18 mm, et qui sont deux à deux distantes de 38 mm.

De plus, la base 2 et le sommet 3 présentent des épaisseurs qui sont respectivement égales à 7 mm et à 8 mm. Quant au corps annulaire 4 de ce premier appui témoin 1, il présente une largeur (dans la direction axiale) égale à 35 mm.

La masse de ce premier appui témoin est de 8 kg.

Les résultats de roulage dans les conditions précitées, pour ledit ensemble monté comportant ce premier appui témoin, ont établi une durée de vie supérieure à 200 km.

### 2) Exemple témoin 2:

Un second appui témoin qui a été intégré à l'ensemble monté précité en vue du test de roulage à plat est constitué d'une composition de caoutchouc vulcanisée qui se différencie uniquement de celle du premier appui témoin, en ce qu'elle comprend un coupage de caoutchouc naturel (60 pce) et de polybutadiène (40 pce), l'architecture, les dimensions et la masse de cet appui étant identiques à celle dudit premier appui témoin.

Ce second appui témoin est caractérisé par sensiblement le même module M10 que ledit premier appui témoin.

Les résultats de roulage dans les conditions précitées, pour cet ensemble monté incluant ce second appui témoin, ont également établi une durée de vie supérieure à 200 km.

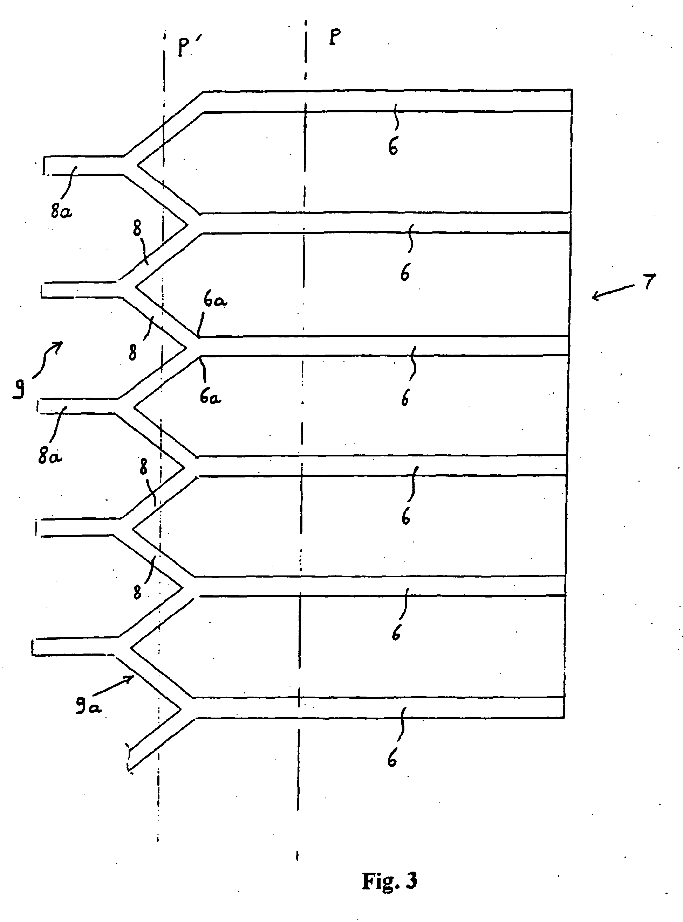

On a par ailleurs testé d'autres appuis témoin qui sont constitués de compositions témoin selon lesdits exemples témoin 1 ou 2, mais qui présentent une architecture telle que celle décrite ci-après en référence aux Figs. 3 à 12. Les résultats de roulage dans les conditions précitées ont établi dans ce cas une durée de vie inférieure à 100 km.

### EXEMPLES D'APPUIS SELON L'INVENTION:

On a testé une série d'appuis selon l'invention, tous les appuis étant constitués d'une même composition de caoutchouc vulcanisée et présentant respectivement des architectures qui sont illustrées aux Figs. 3 à 12. Pour des raisons de clarté de la présente description, ces architectures testées d'appui seront présentées à la fin de ladite description.

Chaque appui selon l'invention est caractérisé par la formulation suivante pour la composition de caoutchouc vulcanisée qui le constitue:
- élastomère: caoutchouc naturel 100 pce;
- charge renforçante: silice « ZEOSIL 1165 MP » 70 pce;
- agent de couplage: « Si69/noir de carbone N330 11 pce;
   (dont 5,5 pce de Si69 et 5,5 pce de noir de carbone N330);
- polypropylène isotactique: 10 pce;
- « 6PPD »: 2 pce;
- ZnO: 4 pce;
- acide stéarique: 1 pce;
- accélérateur de vulcanisation: « CBS »: 3 pce;
- soufre: 4,5 pce;

Cette composition de caoutchouc vulcanisée est préparée de la manière suivante:
- dans une première étape de travail thermo-mécanique mise en oeuvre dans un mélangeur interne de 6 litres, on procède à un malaxage de tous les constituants nécessaires y compris le système de couplage et les additifs divers, à l'exception du système de vulcanisation. On mélange ainsi notamment l'élastomère, ladite charge renforçante et le polypropylène à l'état de poudre, cela à une température initale de 100° C (température d'introduction de l'élastomère), pour que le polypropylène se trouve dispersé dans celui-ci, la température de tombée étant d'environ 155° C;
- dans une seconde étape de travail mécanique, on procède, à une température inférieure à 100° C, à une addition du système de vulcanisation par le soufre au mélange obtenu au terme de ladite première étape;
- dans une troisième étape de vulcanisation, on procède à une cuisson du mélange obtenu au terme de ladite seconde étape, à une température de 150° C.

On notera que la mise en oeuvre de ces trois étapes à des températures inférieures à la température de fusion du polypropylène (168° C) permet d'obtenir, pour ce dernier, une dispersion de particules non fibrillées dans l'élastomère. Plus précisément, ces particules non fibrillées présentent une forme sensiblement sphérique.

On a déterminé par une technique de tamisage la répartition de taille des particules de poudre de polypropylène qui ont été introduites dans le mélangeur en évaluant, pour une masse initiale donnée de polypropylène, les refus de tamisage lors de passages successifs à travers des tamis. On a pour ce faire procédé selon les normes ISO-1435 et NF-14001.

Cette répartition de tailles était la suivante pour chaque tamis, en fractions massiques cumulées par rapport à la masse initiale de polypropylène:

| | |
|---|---|
| taille < 45 µm: | 0,09 % |
| taille < 125 µm: | 5,9 % |
| taille < 180 µm: | 11,4 % |
| taille < 315 µm: | 38,3 % |
| taille < 400 µm: | 73,9 % |
| taille < 500 µm: | 99,9 % |
| taille < 630 µm: | 100 %. |

On en a déduit que la taille moyenne pondérale desdites particules dans la composition de caoutchouc selon l'invention est comprise entre 50 µm et 500 µm.

Avantageusement, chaque appui de l'invention présente une masse de 5 kg qui est sensiblement réduite d'un tiers, par rapport à la masse égale à 8 kg de chacun des appuis témoin. On notera par conséquent qu'un tel appui selon l'invention présente une masse réduite par rapport à des appuis ne comprenant pas une telle dispersion.

De plus, les résultats de roulage dans les conditions précitées, pour des ensembles montés incluant respectivement les appuis selon l'invention, ont également établi une durée de vie supérieure à 200 km.

Additionnellement, chaque appui selon l'invention est caractérisé par un module M10 d'environ 30 MPa, qui lui confère une rigidité supérieure à celle d'appuis dépourvus de ladite dispersion.

On notera que la charge blanche renforçante, telle que la silice, qui est préférentiellement utilisée dans la composition de caoutchouc de chaque appui selon l'invention, procure à cette composition, d'une part, une aptitude à la mise en oeuvre à cru améliorée et, d'autre part, des propriétés à cuit également améliorées, telles que la cohésion, en plus de la rigidité précitée.

### Architectures respectivement testées pour les appuis selon l'invention:

- Un premier mode d'architecture préférentielle d'appui selon l'invention est illustré à la Fig. 3.

Comme cela a été indiqué précédemment d'une manière générale, en référence aux Figs. 1 et 2, un appui de sécurité 1 selon la Fig. 3 est du type comportant ladite base 2, ledit sommet 3 et ledit corps annulaire 4.

Est représenté à la Fig. 3 un élément de support 7 de cet appui 1 préférentiel qui est continu circonférentiellement, ledit élément de support comprenant une pluralité de cloisons 6 s'étendant axialement de part et d'autre du plan médian circonférentiel P de l'appui 1 et étant réparties sur la circonférence dudit appui 1.

On voit à la Fig. 3 que cet élément de support 7 comprend, en l'un desdits côtés de l'appui 1, des éléments de jonction 8 s'étendant sensiblement circonférentiellement. Chaque élément de jonction 8 relie entre elles les extrémités respectives 6a de deux cloisons 6 adjacentes qui sont disposées dudit côté de l'appui 1, et lesdits éléments de jonction 8 sont disposés successivement de façon alternée de part et d'autre desdites cloisons 6.

Plus précisément, les éléments de jonction 8 sont mutuellement épaulés, entre deux cloisons 6 adjacentes, par une nervure 8a s'étendant dudit sommet 3 à ladite base 2 de l'appui 1, de telle manière que lesdits éléments de jonction 8 forment une paroi de jonction continue 9 en forme de soufflet sur tout ledit côté dudit appui 1.

Plus précisément, ladite paroi de jonction 9 comporte une pluralité d'alvéoles 9a qui sont chacune délimitées par deux nervures 8a adjacentes. Le fond de chaque alvéole 9a présente sensiblement une forme de dièdre dont l'arête est formée par une extrémité 6a de cloison 6, et dont les faces sont respectivement formées par lesdits éléments de jonction 8 alternés.

Dans cet exemple préférentiel d'architecture testée, les cloisons 6 de l'appui 1 sont au nombre de 40 sur la circonférence dudit appui 1, elles présentent chacune une épaisseur de 8 mm, et elles sont distantes l'une de l'autre de 40 mm. Et comme cela a été dit ci-dessus pour chaque appui 1 testé, celui-ci présente une largeur de 135 mm, un diamètre de 440 mm et une hauteur de 50 mm.

De plus, la base 2 et le sommet 3 dudit appui 1 présentent des épaisseurs respectivement égales à 6 mm et 7 mm.

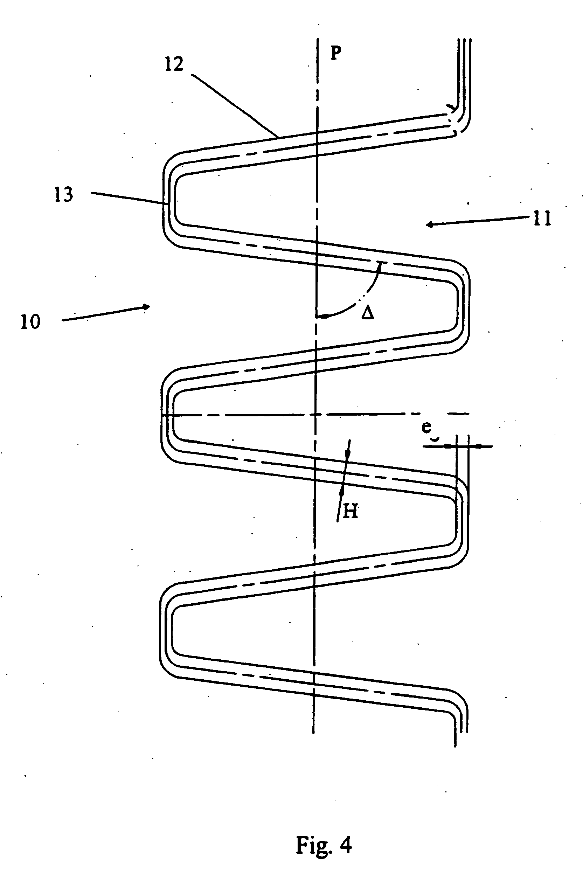

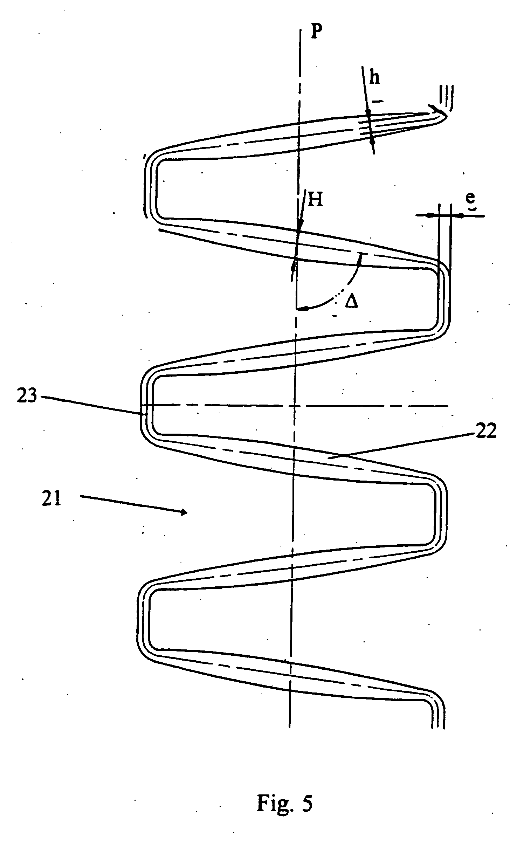

Par ailleurs, la distance dans la direction axiale entre un plan P', axialement médian pour lesdits éléments de jonction 8, et les extrémités libres respectives desdites nervures 8a, est égale à 20 mm dans cet exemple préférentiel.
- Un second mode d'architecture d'appui 1 selon l'invention est illustré à la Fig. 4, les Figs. 5 à 12 illustrant quant à elles des variantes de ce second mode (les éléments structurels analogues à ceux de la Fig. 4 sont identifiés ci-après par des références numériques qui sont augmentées de 10 à chaque Fig., cela à partir de la Fig. 5).

Comme dans ledit premier mode, les appuis 1 relatifs à ces Figs. 4 à 12 sont tous du type comportant ladite base 2, ledit sommet 3 et un corps annulaire 10.
* A la Fig. 4 est représenté un tel corps annulaire 10. Celui-ci est constitué d'un élément de support 11 continu circonférentiellement, qui comporte un ensemble de cloisons 12 reliées deux à deux par des éléments de jonction 13.

Les cloisons 12 s'étendent latéralement de part et d'autre du plan médian circonférentiel P de l'appui 1, et elles sont régulièrement réparties sur la circonférence dudit appui 1. Elles ont une inclinaison Δ, relativement à la direction circonférentielle, qui est proche de 90 degrés. Leur épaisseur H est constante. De plus, deux cloisons 12 adjacentes ont une inclinaison opposée relativement à la direction axiale.

Ces éléments de jonction 13 ont une épaisseur e, ils sont orientés circonférentiellement et relient chacun entre elles les extrémités respectives de deux cloisons 12 adjacentes qui sont disposées d'un même côté de l'appui 1 (ces deux extrémités sont les plus proches l'une de l'autre).

Les éléments de jonction 13 sont ainsi disposés successivement de façon alternée de part et d'autre des cloisons 12.

On notera que l'élément de support 11 ne comporte aucun élément en contre-dépouille, pour faciliter la fabrication de l'appui 1 avec un démoulage axial.
* A la Fig. 5 est représentée une variante de réalisation d'un élément de support 21, en référence à l'élément de support 11 de la Fig. 4.

Les cloisons 22 de cet élément de support 21 ont une épaisseur H, dans leur partie centrale, qui est supérieure à leur épaisseur h, à l'emplacement de leurs extrémités latérales. Dans cet exemple, H est environ deux fois plus grand que h.

Cette variation d'épaisseur donne aux parties centrales des cloisons 22 une très bonne résistance au flambement. Quant aux extrémités latérales, elles sont reliées aux éléments de jonction 23 de façon continue, ce qui leur confère une bonne résistance au flambement.

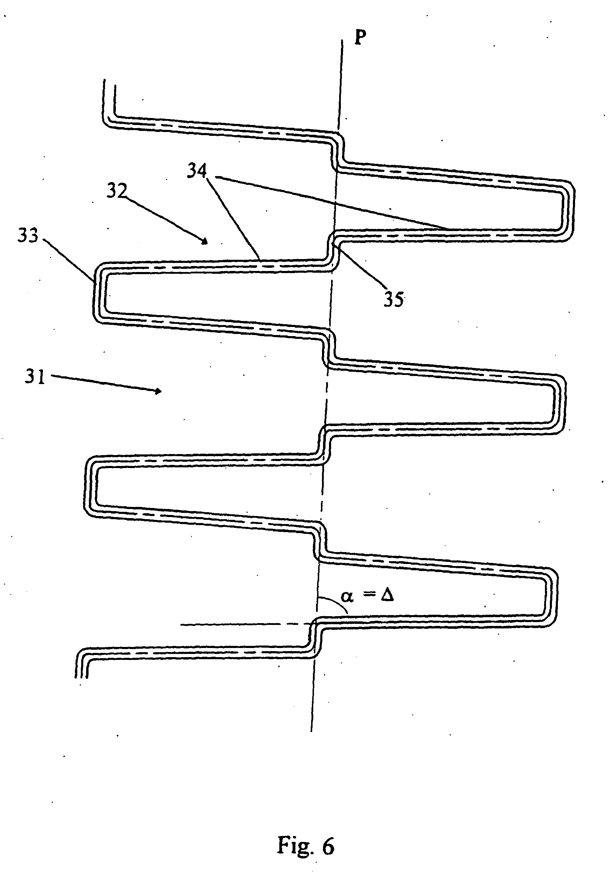

On notera qu'une variation d'épaisseur de 10 % peut déjà avoir des effets sensibles, en vue de repousser l'apparition de flambement en surcharge.
* A la Fig. 6 est représentée une autre variante de réalisation d'un élément de support 31.

Celui-ci comporte, comme précédemment, un ensemble de cloisons 32 qui sont reliées par des éléments de jonction 33. Les cloisons 32 comportent deux parties latérales 34 de même inclinaison Δ relativement à la direction circonférentielle, qui sont décalées circonférentiellement et qui sont reliées dans la partie centrale dudit élément de support 31 par une troisième partie 35 d'orientation sensiblement circonférentielle.

La variation α d'orientation moyenne entre les parties latérales 34 et la partie centrale 35 est ici de l'ordre de 80 degrés. Comme les parties 35 sont d'orientation circonférentielle, les angles α et △ sont égaux.

La présence de cette troisième partie centrale 35, d'orientation moyenne très différente de celle des deux parties latérales, renforce la résistance au flambement de la partie centrale des cloisons 22.

On notera que cette variation α doit, pour être efficace, être supérieure à 20 degrés.

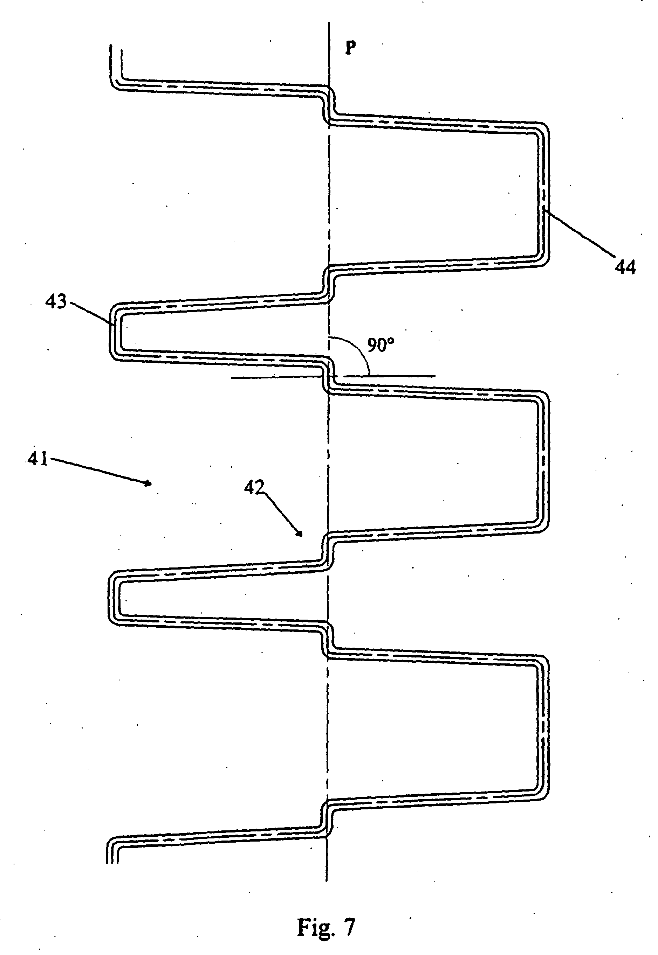

Dans cet exemple de réalisation, les cloisons 32 comportent, d'une extrémité latérale à l'autre, une inversion du sens de leur courbure.
* A la Fig. 7 est représentée une autre variante de réalisation d'un élément de support 41.

Les éléments de jonction 43 qui sont disposés d'un côté de l'élément de support 41 ont ici une longueur circonférentielle qui est inférieure à celle des éléments de jonction 44, lesquels sont disposés de l'autre côté de l'élément de support 41.

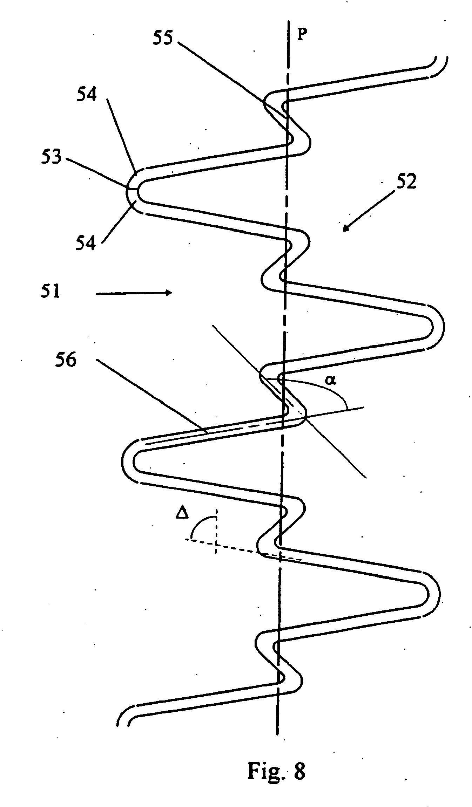

On notera que la longueur sensiblement doublée des éléments de jonction 44 augmente la raideur en compression de l'élément de support 41, de ce côté de l'appui 1. Ce même côté est à disposer du côté intérieur du véhicule, là où les efforts subis par l'appui 1 en fonctionnement sont les plus importants.
* A la Fig. 8 est représentée une autre variante de réalisation d'un élément de support 51.

Les éléments de jonction 53 sont ici pratiquement réduits à la surface de contact entre les deux extrémités latérales 54 en forme d'arc de cercle des cloisons 52.

Ces cloisons 52 comportent également une partie centrale de liaison 55.

On notera que la variation α d'orientation moyenne entre les deux parties latérales 56 et la partie centrale 55 est supérieure à 90 degrés et est de l'ordre de 110 degrés, ce qui augmente la densité moyenne d'appui de l'élément de support 51 dans sa partie centrale.

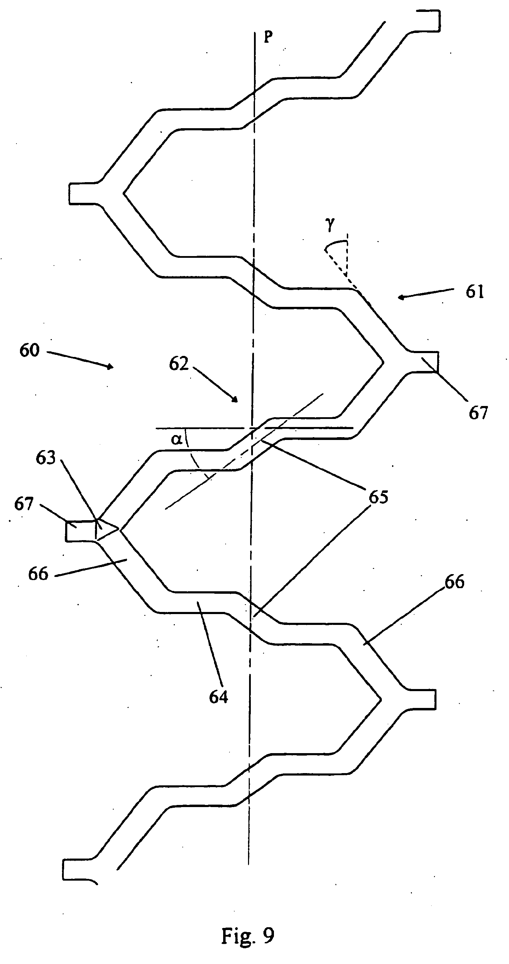

Ces cloisons 52 comportent, d'une extrémité latérale à l'autre, trois inversions de leur sens de courbure.
* A la Fig. 9 est représentée une autre variante de réalisation d'un élément de support 61. variante proche de celle de la Fig. 8 avec les modifications suivantes.

Les cloisons 62 comportent des segments rectilignes et présentent trois inversions de leur sens de courbure. Elles comprennent deux parties latérales d'orientation axiale 64, qui sont reliées, d'une part, entre elles par une partie centrale 65 et, d'autre part, aux éléments de jonction 63 par des extrémités latérales 66 d'orientation moyenne γ proche de 30 degrés, par rapport à la direction circonférentielle.

La variation α d'orientation moyenne qui existe entre les deux parties d'orientation axiale 64 des cloisons 62 et la partie centrale de jonction 65 est de l'ordre de 40 degrés.

Les éléments de jonction 63 peuvent être ici définis comme étant des éléments de section sensiblement triangulaire, qui sont disposés entre deux extrémités latérales 66 adjacentes.

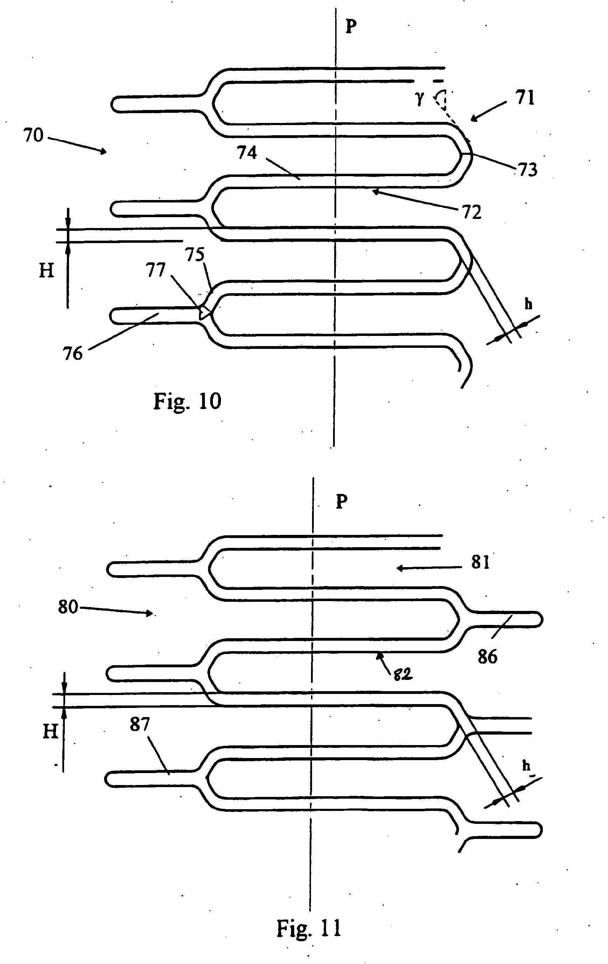

Des deux côtés de l'élément de support 61, le corps annulaire 60 comprend un ensemble de parois d'orientation sensiblement axiale 67 qui prolonge chaque élément de jonction 63 vers l'extérieur de l'appui 1. Comme cela est visible sur cette Fig. 9, la réunion de chaque élément de jonction 63, desdites extrémités latérales adjacentes 66 et de ladite paroi axiale 67 forme ainsi une étoile à trois branches, laquelle est très résistante au flambement.
* A la Fig. 10 est représentée une autre variante de réalisation d'un corps annulaire 70 et, par conséquent, d'un élément de support 71.

Ce dernier comprend des cloisons 72 avec des parties centrales 74 d'orientation axiale qui sont prolongées de part et d'autre par une extrémité latérale 75, laquelle présente une orientation γ proche de 30 degrés par rapport à la direction circonférentielle.

Les éléments de jonction 73 sont, d'un côté du corps annulaire 70, réduits à la surface de contact entre les deux extrémités latérales 75 adjacentes. De l'autre côté, le corps annulaire 70 comporte des parois latérales 76 qui épaulent de ce côté les éléments de jonction 77, lesquels présentent une forme sensiblement triangulaire.

On notera qu'en ce dernier côté, la raideur en compression de l'élément de support est supérieure.

La longueur des parois latérales 76 est notablement inférieure à la moitié de la longueur des parties centrales 74 des cloisons 72, pour qu'elles ne soient pas susceptibles de flamber.

De préférence, le côté de l'élément de support 71 dont la raideur en compression radiale est la plus élevée est à disposer du côté intérieur du véhicule. En effet, on a constaté que les efforts sont les plus élevés de ce côté intérieur du véhicule.

Les cloisons 72 ont une épaisseur H dans leur partie centrale 74 qui est supérieure à l'épaisseur h de leurs parties latérales 75, de manière à renforcer la résistance au flambement de cette partie centrale 74.
* A la Fig. 11 est représentée une autre variante de réalisation d'un corps annulaire 80, variante très proche dudit corps annulaire 70 de la Fig. 10.

Ce corps annulaire 80 comporte des parois latérales axiales 86 et 87 qui épaulent des deux côtés l'élément de support 81, lequel est également structurellement très proche dudit élément de support 71.

Pour une largeur donnée de corps annulaire 80, ces parois latérales 86 et 87 présentent l'avantage de réduire la largeur axiale des cloisons 82 de l'élément de support continu 81, et ainsi d'améliorer la résistance au flambement de l'ensemble de la structure. Les longueurs axiales desdites parois 86 et 87 peuvent être différentes, comme illustré à la Fig. 11.
* A la Fig. 12 est représentée une vue axiale d'un appui 1 incluant un élément de support 91 tel que décrit à la Fig. 11, mais comportant en plus un voile circonférentiel 94 continu qui est disposé à mi-hauteur du corps annulaire 90. Ce voile circonférentiel 94, de forme cylindrique, présente l'avantage de procurer une augmentation très sensible, de l'ordre d'un facteur quatre, de la charge limite de flambement de la structure de l'appui 1.

Chacun des appuis 1 décrits en référence aux Figs. 4 à 12 présente les caractéristiques dimensionnelles suivantes.

Les cloisons 12, ..., 92 sont au nombre de 40 sur la circonférence de chaque appui 1, elles présentent chacune une épaisseur de 8 mm, et elles sont distantes l'une de l'autre de 40 mm. Et comme cela a été dit ci-dessus pour chaque appui 1 testé, celui-ci présente une largeur de 135 mm, un diamètre de 440 mm et une hauteur de 50 mm.

De plus, la base 2 et le sommet 3 dudit appui 1 présentent des épaisseurs respectivement égales à 6 mm et 7 mm.

Tous les éléments de support 7, 11, ..., 91 et les corps annulaires 4, 10, ..., 90 présentés ci-dessus sont réalisables par des techniques de moulage. De préférence, ils ne comportent aucune partie en contre dépouille pour faciliter un démoulage axial.

On notera que l'on pourrait également utiliser, à titre d'architecture d'appuis selon l'invention, un appui constitué de plusieurs anneaux reliés entre eux dans la direction axiale dudit appui, sa structure globale étant inchangée.

On pourrait par exemple prévoir pour un tel appui un premier anneau de section axiale sensiblement rectangulaire, et un ou plusieurs éléments annulaires présentant une pluralité d'évidements et s'étendant sensiblement axialement sur toutes leurs largeurs et sensiblement régulièrement répartis sur leurs circonférences.

Un tel appui à anneaux est plus aisé à introduire dans un pneumatique, en raison de la rigidité en flexion inférieure de ses différents éléments annulaires.

## Revendications

1. Composition de caoutchouc, utilisable à l'état vulcanisé comme appui de sécurité (1) destiné à être monté sur une jante de roue à l'intérieur d'une enveloppe de pneumatique, ladite composition comportant au moins un élastomère diénique, 5 à 30 pce de particules d'un polymère thermoplastique α-oléfinique dont la température de fusion est égale ou supérieure à 150°C, **caractérisée en ce qu'**elle comporte également plus de 60 pce de charge renforçante, de 3 à 8 pce de soufre, et aussi **en ce que** la taille moyenne pondérale desdites particules est comprise entre 30 µm et 500 µm (pce: parties en poids pour 100 parties d'élastomère(s) diénique(s)).

2. Composition de caoutchouc selon la revendication 1, **caractérisée en ce que** ladite charge renforçante comprend à titre majoritaire une charge blanche renforçante.

3. Composition de caoutchouc selon la revendication 2, **caractérisée en ce que** ladite charge blanche renforçante est constituée de silice, selon une quantité allant de 60 à 80 pce.

4. Composition de caoutchouc selon la revendication 2 ou 3, **caractérisée en ce qu'**elle comprend un agent de liaison charge blanche renforçante / élastomère(s) qui est de type alkoxysilane polysulfuré.

5. Composition de caoutchouc selon une des revendications précédentes, **caractérisée en ce que** ledit polymère α-oléfinique est constitué de polypropylène isotactique.

6. Composition de caoutchouc selon une des revendications précédentes, **caractérisée en ce qu'**elle comprend un seul élastomère diénique qui est constitué de caoutchouc naturel ou de polyisoprène synthétique.

7. Composition de caoutchouc selon une des revendications 1 à 5, **caractérisée en ce qu'**elle comprend un coupage:
- selon une quantité égale ou supérieure à 60 pce, de caoutchouc naturel ou de polyisoprène synthétique, et
- selon une quantité inférieure ou égale à 40 pce, d'un homopolymère obtenu par polymérisation d'un monomère diène conjugué ayant de 4 à 12 atomes de carbone, ou d'un copolymère obtenu par copolymérisation d'un ou plusieurs diènes conjugués entre eux ou avec un ou plusieurs composés vinylaromatiques ayant de 8 à 20 atomes de carbone.

8. Composition de caoutchouc selon la revendication 7, **caractérisée en ce que** ledit coupage est constitué d'environ 60 pce de caoutchouc naturel et d'environ 40 pce de polybutadiène.

9. Composition de caoutchouc selon une des revendications précédentes, **caractérisée en ce qu'**elle présente un module d'élasticité M10 à 10 % de déformation qui est supérieur à 10 MPa.

10. Composition de caoutchouc selon une des revendications précédentes, **caractérisée en ce que** ledit polymère α-oléfinique est dispersé dans ledit ou lesdits élastomère sous forme de particules sensiblement sphériques.

11. Procédé de préparation d'une composition de caoutchouc à l'état vulcanisé selon une des revendications précédentes, **caractérisé en ce qu'**il consiste essentiellement,
- dans une première étape de travail thermo-mécanique, en un malaxage dudit ou desdits élastomères, de ladite charge renforçante et dudit polymère α-oléfinique à l'état de poudre, la température de tombée étant d'environ 155° C, puis
- dans une seconde étape de travail mécanique, en une addition d'un système de vulcanisation par le soufre au mélange obtenu au terme de ladite première étape, puis
- dans une troisième étape de vulcanisation, en une cuisson du mélange obtenu au terme de ladite seconde étape,
de telle manière que les températures de mise en oeuvre de ces trois étapes soient toujours inférieures à la température de fusion dudit polymère α-oléfinique, pour que ce dernier soit dispersé dans ledit ou lesdits élastomères sous forme de particules sensiblement sphériques.

12. Procédé de préparation selon la revendication 11, **caractérisé en ce qu'**il consiste,
- dans ladite première étape, à procéder audit malaxage à une température initiale sensiblement égale à 100° C, puis
- dans ladite seconde étape, à procéder à ladite addition à une température inférieure à 100° C, puis
- dans ladite troisième étape, à procéder à ladite cuisson à une température sensiblement égale à 150° C.

13. Appui de sécurité (1) destiné à être monté sur une jante de roue à l'intérieur d'une enveloppe de pneumatique pour véhicule, de manière à pouvoir supporter une bande de roulement de ladite enveloppe en cas de chute de pression de gonflage, **caractérisé en ce que** ledit appui (1) est constitué d'une composition de caoutchouc vulcanisée selon une des revendications 1 à 10.

14. Appui de sécurité (1) selon la revendication 13, du type comportant:
- une base (2) sensiblement cylindrique destinée à s'adapter autour de ladite jante,
- un sommet (3) sensiblement cylindrique destiné à entrer en contact avec ladite bande de roulement en cas de chute de pression, et laissant une garde par rapport à ladite bande à la pression nominale, et
- un corps annulaire (4) reliant ladite base (2) et ledit sommet (3) entre eux, ledit corps (4) comportant un élément de support (7) continu circonférentiellement avec un plan médian circonférentiel (P), ledit élément de support (7) comprenant:
• une pluralité de cloisons (6) s'étendant axialement de part et d'autre dudit plan médian circonférentiel (P) et réparties sur la circonférence dudit appui (1),
• des éléments de jonction (8) s'étendant sensiblement circonférentiellement en l'un desdits côtés de l'appui (1), chaque élément de jonction reliant entre elles les extrémités respectives (6a) de deux cloisons (6) adjacentes qui sont disposées dudit côté de l'appui (1), lesdits éléments de jonction (8) étant disposés successivement de façon alternée de part et d'autre desdites cloisons (6),
**caractérisé en ce que**, entre deux cloisons (6) adjacentes, lesdits éléments de jonction (8) sont mutuellement épaulés par une nervure (8a) s'étendant dudit sommet (3) à ladite base (2) de l'appui (1), de telle manière que lesdits éléments de jonction (8) forment une paroi de jonction continue (9) en forme de soufflet sur tout ledit côté dudit appui (1).

15. Appui de sécurité (1) selon la revendication 14, **caractérisé en ce que** ladite paroi continue (9) comporte une pluralité d'alvéoles (9a) qui sont chacune délimitées par deux nervures (8a) adjacentes, le fond de chaque alvéole (9a) présentant sensiblement une forme de dièdre dont l'arête est formée par l'une desdites cloisons (6) et dont les faces sont respectivement formées par lesdits éléments de jonction (8) alternés.

16. Appui de sécurité (1) selon la revendication 13, du type comportant:
- une base (2) sensiblement cylindrique destinée à s'adapter autour de ladite jante,
- un sommet (3) sensiblement cylindrique destiné à entrer en contact avec ladite bande de roulement en cas de chute de pression, et laissant une garde par rapport à ladite bande à la pression nominale, et
- un corps annulaire (10) reliant ladite base (2) et ledit sommet (3) entre eux, ledit corps (10) comportant un élément de support (11,..., 91) continu circonférentiellement avec un plan médian circonférentiel (P), ledit élément de support (11,..., 91) comprenant:
• une pluralité de cloisons (12,..., 92) s'étendant axialement de part et d'autre dudit plan médian circonférentiel (P) et réparties sur la circonférence dudit appui (1), et
• des éléments de jonction (13,..., 93) s'étendant sensiblement circonférentiellement, chaque élément de jonction (13,..., 93) reliant entre elles les extrémités respectives de deux cloisons (12,..., 92) adjacentes qui sont disposées d'un même côté de l'appui (1), lesdits éléments de jonction (13,..., 93) étant disposés successivement de façon alternée de part et d'autre desdites cloisons (12,..., 92),
**caractérisé en ce que** lesdites cloisons (12,..., 92) sont adaptées dans leur partie centrale relativement à leurs extrémités latérales pour renforcer la résistance à un flambement sous un chargement radial dudit corps annulaire (10).

17. Appui de sécurité (1) selon la revendication 16, **caractérisé en ce que** le rapport entre l'épaisseur desdites cloisons (22, 72) dans leur partie centrale et leurs extrémités latérales est supérieur à 1,1.

18. Appui de sécurité (1) selon la revendication 16 ou 17, **caractérisé en ce que** lesdites cloisons (32) présentent, d'une extrémité latérale à l'autre, au moins une inversion du sens de leur courbure.

19. Appui de sécurité (1) selon la revendication 18, **caractérisé en ce que** lesdites cloisons (62) présentent une partie centrale (65) s'étendant sensiblement axialement entre deux parties latérales (64), lesdites parties latérales rejoignant les éléments de jonction (63) en faisant avec la direction circonférentielle un angle γ allant de 20 à 40 degrés.

20. Appui de sécurité (1) selon l'une des revendications 16 à 19, **caractérisé en ce que** lesdites cloisons (52) présentent, d'une extrémité latérale à l'autre, au moins trois inversions du sens de leur courbure.

21. Appui de sécurité (1) selon l'une des revendications 18 à 20, **caractérisé en ce que** lesdites cloisons (32) présentent, dans leur zone centrale, deux parties (34) s'étendant sensiblement axialement et décalées circonférentiellement l'une par rapport à l'autre, ainsi qu'une troisième partie (35) de jonction.

22. Appui de sécurité (1) selon l'une des revendications 16 à 21, **caractérisé en ce que**, d'un côté au moins dudit élément de support (61, 81, 91), chaque élément de jonction est épaulé par au moins une paroi (67, 87)s'étendant sensiblement axialement vers l'extérieur dudit corps annulaire.

23. Appui de sécurité (1) selon la revendication 22, **caractérisé en ce que** chaque élément de jonction (63) forme avec une paroi axiale (67) qui l'épaule et les extrémités latérales (66) des deux cloisons (62) adjacentes un ensemble en forme d'étoile à trois branches.

24. Appui de sécurité (1) selon l'une des revendications 16 à 23, **caractérisé en ce que** l'élément de support (91) comporte en plus, un voile (94) sensiblement cylindrique coaxial avec l'appui (1) qui est disposé radialement à mi-hauteur dudit élément de support (91).

25. Appui de sécurité (1) selon l'une des revendications 16 à 24, **caractérisé en ce que** l'élément de support (11) est adapté pour ne comprendre aucune partie en contre-dépouille s'opposant à un démoulage axial de l'appui (1).

26. Ensemble monté pour véhicule automobile comportant une jante de roue, une enveloppe de pneumatique montée sur ladite jante et un appui de sécurité (1) monté sur ladite jante à l'intérieur de ladite enveloppe de manière à pouvoir supporter une bande de roulement de ladite enveloppe en cas de chute de pression de gonflage, ladite jante comportant en chacun de ses deux bords périphériques un siège de jante destiné à recevoir un bourrelet de ladite enveloppe, ladite jante comportant entre ses deux sièges, d'une part, une portée et, d'autre part, une gorge de montage reliant ladite portée à un rebord axialement interne de l'un desdits sièges, ou premier siège, **caractérisé en ce que** ledit appui (1) est tel que défini à l'une des revendications 13 à 25.

## Claims

1. A rubber composition, usable in the vulcanised state as a safety support (1) intended to be mounted on a wheel rim inside a tyre, said composition comprising at least one diene elastomer, 5 to 30 phr of particles of an α-olefinic thermoplastic polymer, the melting point of which is greater than or equal to 150°C, **characterised in that** it also comprises more than 60 phr of reinforcing filler, from 3 to 8 phr of sulphur, and also **in that** the mean size by weight of these particles is between 30 µm and 500 µm (phr: parts by weight per 100 parts of diene elastomer(s)).

2. A rubber composition according to claim 1, **characterised in that** said reinforcing filler comprises a reinforcing white filler in a majority proportion.

3. A rubber composition according to claim 2, **characterised in that** said reinforcing white filler consists of silica in a quantity ranging from 60 to 80 phr.

4. A rubber composition according to claim 2 or 3, **characterised in that** it comprises a reinforcing white filler/elastomer bonding agent which is of the polysulphurised alkoxysilane type.

5. A rubber composition according to one of the preceding claims, **characterised in that** said α-olefinic polymer consists of isotactic polypropylene.

6. A rubber composition according to one of the preceding claims, **characterised in that** it comprises a single diene elastomer consisting of natural rubber or synthetic polyisoprene.

7. A rubber composition according to one of claims 1 to 5, **characterised in that** it comprises a blend:
- of natural rubber or synthetic polyisoprene in a quantity greater than or equal to 60 phr, and
- of a homopolymer obtained by polymerisation of a conjugated diene monomer having from 4 to 12 carbon atoms or of a copolymer obtained by copolymerisation of one or more conjugated dienes with each other or with one or more vinyl aromatic compounds having from 8 to 20 carbon atoms in a quantity of less than or equal to 40 phr.

8. A rubber composition according to claim 7, **characterised in that** said blend consists of approx. 60 phr of natural rubber and approx. 40 phr of polybutadiene.

9. A rubber composition according to one of the preceding claims, **characterised in that** it exhibits an M10 elasticity modulus at 10% deformation which is greater than 10 MPa.

10. A rubber composition according to one of the preceding claims, **characterised in that** said α-olefinic polymer is dispersed in said elastomer(s) in the form of substantially spherical particles.

11. A process for the preparation of a rubber composition in the vulcanised state according to one of the preceding claims, **characterised in that** it essentially consists,
- in a first thermomechanical working stage, of kneading said elastomer(s), said reinforcing filler and said α-olefinic polymer in the powder state with the dropping temperature being approximately 155°C, then
- in a second mechanical working stage, of adding a sulphur vulcanisation system to the mixture obtained on completion of said first stage, then
- in a third vulcanisation stage, of curing of the mixture obtained on completion of said second stage,
in such a manner that the operating temperatures of these three stages are always below the melting temperature of said α-olefinic polymer, so that this latter is dispersed in said elastomer(s) in the form of substantially spherical particles.

12. A preparation process according to claim 11, **characterised in that** it consists
- in said first stage, of performing said kneading at an initial temperature substantially equal to 100°C, then
- in said second stage, of performing said addition at a temperature of below 100°C, then
- in said third stage, of performing said curing at a temperature substantially equal to 150°C.

13. A safety support (1) intended to be mounted on a wheel rim inside a vehicle tyre, so as to be capable of supporting a tread of said tyre in the event of a drop in inflation pressure, **characterised in that** said support (1) consists of a vulcanised rubber composition according to one of claims 1 to 10.

14. A safety support (1) according to claim 13, of the type comprising:
- a substantially cylindrical base (2), intended to conform to the said rim,
- a substantially cylindrical crown (3) intended to come into contact with the tyre tread in the event of a drop in pressure and to leave a clearance relative to said tread at nominal pressure, and
- an annular body (4) connecting said base (2) and said crown (3) together, said body (4) comprising a circumferentially continuous supporting element (7) with a circumferential median plane (P), said supporting element (7) comprising:
• a plurality of partitions (6) extending axially on each side of said circumferential median plane (P) and distributed around the circumference of said support (1),
• joining elements (8) extending substantially circumferentially on one of said sides of the support (1), each joining element connecting the respective ends (6a) of two adjacent partitions (6) which are arranged on the said side of the support (1), said joining elements (8) being arranged alternately in succession on each side of said partitions (6),
**characterised in that**, between two adjacent partitions (6), said joining elements (8) are mutually supported by a rib (8a) extending from said crown (3) to said base (2) of the support (1), such that said joining elements (8) form a continuous joining wall (9) in the form of a gusset all along said side of said support (1).

15. A safety support (1) according to claim 14, **characterised in that** said continuous wall (9) comprises a plurality of cells (9a), each of which is delimited by two adjacent ribs (8a), the bottom of each cell (9a) substantially exhibiting a dihedral shape, the ridge of which is formed by one of said partitions (6) and the faces of which are respectively formed by said alternate joining elements (8).

16. A safety support (1) according to claim 13, of the type comprising:
- a substantially cylindrical base (2), intended to conform to the said rim,
- a substantially cylindrical crown (3) intended to come into contact with the tyre tread in the event of a drop in pressure and to leave a clearance relative to said tread at nominal pressure, and
- an annular body (10) connecting said base (2) and said crown (3) together, said body (10) comprising a circumferentially continuous supporting element (11, ..., 91) with a circumferential median plane (P), said supporting element (11, ..., 91) comprising:
• a plurality of partitions (12, ..., 92) extending axially on each side of said circumferential median plane (P) and distributed around the circumference of said support (1), and
• joining elements (13, ..., 93) extending substantially circumferentially, each joining element (13, ..., 93) connecting the respective ends of two adjacent partitions (12, ..., 92) which are arranged on the same side of the support (1), said joining elements (13, ..., 93) being arranged alternately in succession on each side of said partitions (12,..., 92),
**characterised in that** said partitions (12, ..., 92) are modified in the central portion thereof relative to the lateral ends thereof such as to increase the buckling resistance of the annular body (10) under radial load.

17. A safety support (1) according to claim 16, **characterised in that** the ratio between the thickness of said partitions (22, 72) in the central portion thereof and the lateral ends thereof is greater than 1.1.

18. A safety support (1) according to claim 16 or 17, **characterised in that**, from one lateral end to the other, said partitions (32) exhibit at least one reversal in the direction of the curvature thereof.

19. A safety support (1) according to claim 18, **characterised in that** said partitions (62) exhibit a central portion (65) extending substantially axially between two lateral portions (64), said lateral portions meeting the joining elements (63) and forming an angle γ with the circumferential direction ranging from 20 to 40 degrees.

20. A safety support (1) according to one of claims 16 to 19, **characterised in that** said partitions (52) exhibit, from one lateral end to the other, at least three reversals in the direction of the curvature thereof.

21. A safety support (1) according to one of claims 18 to 20, **characterised in that** said partitions (32) exhibit, in the central zone thereof, two portions (34) extending substantially axially and offset circumferentially relative to each other, together with a third joining portion (35).

22. A safety support (1) according to one of claims 16 to 21, **characterised in that**, on at least one side of said supporting element (61, 81, 91), each joining element is supported by at least one wall (67, 87) extending substantially axially towards the outside of said annular body.

23. A safety support (1) according to claim 22, **characterised in that** each joining element (63) forms with a supporting axial wall (67) and the lateral ends (66) of the two adjacent partitions (62) a three-branched star structure.

24. A safety support (1) according to one of claims 16 to 23, **characterised in that** the supporting element (91) additionally comprises a web (94) which is substantially cylindrical and coaxial with the support (1), which web is arranged radially at half height of said supporting element (91).

25. A safety support (1) according to one of claims 16 to 24, **characterised in that** the supporting element (11) is adjusted so as to comprise no undercut portions obstructing axial demoulding of the support (1).

26. A mounted assembly for a motor vehicle comprising a wheel rim, a tyre mounted on said rim and a safety support (1) mounted on said rim inside said tyre so as to be capable of supporting a tread of said tyre in the event of a drop in inflation pressure, said rim comprising on each of the peripheral edges thereof a rim seat intended to receive a bead of said tyre, said rim comprising between the two seats thereof, on the one hand, a bearing surface and, on the other, a mounting groove connecting said bearing surface to an axially internal lip of one of said seats, or first seat, **characterised in that** said support (1) is as defined in one of claims 13 to 25.

## Patentansprüche

1. Kautschukzusammensetzung, die im vulkanisierten Zustand als Notlaufring (1) verwendbar ist, der dazu bestimmt ist, innerhalb eines Reifenmantels auf eine Radfelge montiert zu werden, wobei diese Zusammensetzung mindestens ein Dienelastomer enthält, 5 bis 30 pce Partikel eines thermoplastischen α-olefinischen Polymers mit einer Schmelztemperatur größer oder gleich 150 °C, **dadurch gekennzeichnet, dass** sie auch mehr als 60 pce Verstärkerfüllstoff, 3 bis 8 pce Schwefel enthält, und auch **dadurch**, dass die mittlere Gewichtsgröße dieser Partikel zwischen 30 µm und 500 µm liegt (pce: Gewichtsteile auf 100 Teile Dienelastomer(e)).

2. Kautschukzusammensetzung nach Anspruch 1, **dadurch gekennzeichnet, dass** der Verstärkerfüllstoff mehrheitlich einen weißen Verstärkerfüllstoff enthält.

3. Kautschukzusammensetzung nach Anspruch 2, **dadurch gekennzeichnet, dass** der weiße Verstärkerfüllstoff aus Siliciumdioxid in einer Menge von 60 bis 80 pce besteht.

4. Kautschukzusammensetzung nach Anspruch 2 oder 3, **dadurch gekennzeichnet, dass** sie ein Bindemittel weißer Verstärkerfüllstoff/Elastomer(e) enthält, das vom Typ polysulfuriertes Alkoxysilan ist.

5. Kautschukzusammensetzung nach einem der vorherigen Ansprüche, **dadurch gekennzeichnet, dass** das α-olefinische Polymer aus isotaktischem Polypropylen besteht.

6. Kautschukzusammensetzung nach einem der vorherigen Ansprüche, **dadurch gekennzeichnet, dass** sie ein einziges Dienelastomer enthält, das aus Naturkautschuk oder synthetischem Polyisopren besteht.

7. Kautschukzusammensetzung nach einem der Ansprüche 1 bis 5, **dadurch gekennzeichnet, dass** sie einen Verschnitt enthält:
- in einer Menge größer oder gleich 60 pce, aus Naturkautschuk oder synthetischem Polyisopren, und
- in einer Menge kleiner oder gleich 40 pce, aus einem Homopolymer, das durch Polymerisation eines konjugierten Dienmonomers mit 4 bis 12 Kohlenstoffatomen erhalten wird, oder aus einem Copolymer, das durch Copolymerisation eines oder mehrerer Diene erhalten wird, die untereinander oder mit einen oder mehreren vinylaromatischen Verbindungen mit 8 bis 20 Kohlenstoffatomen konjugiert sind.

8. Kautschukzusammensetzung nach Anspruch 7, **dadurch gekennzeichnet, dass** der Verschnitt aus etwa 60 pce Naturkautschuk und etwa 40 pce Polybutadien besteht.

9. Kautschukzusammensetzung nach einem der vorherigen Ansprüche, **dadurch gekennzeichnet, dass** sie ein Elastizitätsmodul M10 bei 10% Verformung aufweist, das größer ist als 10 MPa.

10. Kautschukzusammensetzung nach einem der vorherigen Ansprüche, **dadurch gekennzeichnet, dass** das αolefinische Polymer in Form von im Wesentlichen kugelförmigen Partikeln in diesem oder diesen Elastomer(en) verteilt ist.

11. Verfahren zur Herstellung einer Kautschukzusammensetzung im vulkanisierten Zustand nach einem der vorherigen Ansprüche, **dadurch gekennzeichnet, dass** es im Wesentlichen besteht,
- in einem ersten Schritt der thermomechanischen Bearbeitung, aus einem Rühren des Elastomers oder der Elastomere, des Verstärkerfüllstoffs und des α-olefinischen Polymers im pulverförmigen Zustand, wobei die Fällungstemperatur etwa 155 °C ist, dann
- in einem zweiten Schritt der mechanischen Bearbeitung, aus einem Zusatz eines Vulkanisationssystems durch Schwefel zur Mischung, die am Ende des ersten Schritts erhalten wird, dann
- in einem dritten Schritt der Vulkanisation, aus einem Kochen der Mischung, die am Ende des zweiten Schritts erhalten wird,
derart, dass die Durchführungstemperaturen dieser drei Schritte stets unterhalb der Schmelztemperatur des α-olefinischen Polymers liegen, damit Letzteres in Form von im Wesentlichen kugelförmigen Partikeln im oder in den Elastomer(en) verteilt wird.

12. Verfahren nach Anspruch 11, **dadurch gekennzeichnet, dass** es darin besteht,
- im ersten Schritt das Rühren bei einer Anfangstemperatur von im Wesentlichen gleich 100 °C durchzuführen, dann
- im zweiten Schritt den Zusatz bei einer Temperatur kleiner als 100 °C durchzuführen, dann
- im dritten Schritt, das Kochen bei einer Temperatur von im Wesentlichen gleich 150 °C durchzuführen.

13. Notlaufring (1), der dazu bestimmt ist, innerhalb eines Reifenmantels für Fahrzeuge auf eine Radfelge montiert zu werden, um bei einem Abfall des Reifenfülldrucks eine Lauffläche des Mantels tragen zu können, **dadurch gekennzeichnet, dass** dieser Laufring (1) aus einer vulkanisierten Kautschukzusammensetzung nach einem der Ansprüche 1 bis 10 besteht.

14. Notlaufring (1) nach Anspruch 13 des Typs mit:
- einer im Wesentlichen zylindrischen Basis (2), die dazu bestimmt ist, um die Felge herum angebracht zu werden,
- einem im Wesentlichen zylindrischen Scheitel (3), der dazu bestimmt ist, bei einem Druckabfall mit der Lauffläche in Kontakt zu kommen, und der beim Nenndruck einen Abstand zu dieser Lauffläche hält, und
- einem ringförmigen Körper (4), der die Basis (2) und den Scheitel (3) miteinander verbindet, wobei dieser Körper (4) ein in der Umfangsrichtung fortlaufendes Tragelement (7) mit einer Umfangsmedianebene (P) aufweist, wobei dieses Tragelement (7) umfasst:
* mehrere Wände (6), die axial beiderseits der Umfangsmedianebene (P) verlaufen und auf dem Umfang des Laufrings (1) verteilt sind,
* Verbindungselemente (8), die im Wesentlichen in der Umfangsrichtung auf einer der Seiten des Laufrings (1) verlaufen, wobei jedes Verbindungselement die jeweiligen Enden (6a) von zwei benachbarten Wänden (6) miteinander verbindet, die auf dieser Seite des Laufrings (1) liegen, wobei diese Verbindungselemente (8) aufeinanderfolgend auf alternierende Weise beiderseits der Wände (6) angeordnet sind,
**dadurch gekennzeichnet, dass** die Verbindungselemente (8) zwischen zwei benachbarten Wänden (6) durch eine Rippe (8a), die vom Scheitel (3) zur Basis (2) des Laufrings (1) verläuft, derart gegenseitig angelegt werden, dass die Verbindungselemente (8) auf der ganzen Seite des Laufrings (1) eine durchlaufende Verbindungswand (9) in Form eines Balgs formen.

15. Notlaufring (1) nach Anspruch 14, **dadurch gekennzeichnet, dass** die durchlaufende Wand (9) mehrere Zellen (9a) enthält, die alle durch zwei benachbarte Rippen (8a) begrenzt werden, wobei der Boden jeder Zelle (9a) im Wesentlichen eine V-Form aufweist, deren Scheitel durch eine der Wände (6) geformt wird und deren Seiten jeweils durch die alternierenden Verbindungselemente (8) geformt werden.

16. Notlaufring (1) nach Anspruch 13 des Typs mit:
- einer im Wesentlichen zylindrischen Basis (2), die dazu bestimmt ist, um die Felge herum angebracht zu werden,
- einem im Wesentlichen zylindrischen Scheitel (3), der dazu bestimmt ist, bei einem Druckabfall mit der Lauffläche in Kontakt zu kommen, und der beim Nenndruck einen Abstand zu dieser Lauffläche hält, und
- einem ringförmigen Körper (10), der die Basis (2) und den Scheitel (3) miteinander verbindet, wobei dieser Körper (10) ein in der Umfangsrichtung fortlaufendes Tragelement (11, ..., 91) mit einer Umfangsmedianebene (P) aufweist, wobei dieses Tragelement (11, ..., 91) umfasst:
* mehrere Wände (12, ..., 92), die axial beiderseits der Umfangsmedianebene (P) verlaufen und auf dem Umfang des Laufrings (1) verteilt sind,
* Verbindungselemente (13, ..., 93), die im Wesentlichen in der Umfangsrichtung verlaufen, wobei jedes Verbindungselement (13, ..., 93) die jeweiligen Enden von zwei benachbarten Wänden (12, ..., 92), die auf einer selben Seite des Laufrings (1) liegen, miteinander verbindet, wobei diese Verbindungselemente (13, ..., 93) aufeinanderfolgend auf alternierende Weise beiderseits der Wände (12, ..., 92) angeordnet sind,
**dadurch gekennzeichnet, dass** die Wände (12, ..., 92) in ihrem mittleren Abschnitt relativ zu ihren seitlichen Enden geeignet sind, unter einer radialen Belastung des ringförmigen Körpers (10) die Knickfestigkeit zu verstärken.

17. Notlaufring (1) nach Anspruch 16, **dadurch gekennzeichnet, dass** das Verhältnis zwischen der Dicke der Wände (22, 72) in ihrem mittleren Abschnitt und ihren seitlichen Enden größer als 1,1 ist.

18. Notlaufring (1) nach Anspruch 16 oder 17, **dadurch gekennzeichnet, dass** die Wände (32) von einem seitlichen Ende zum anderen mindestens eine Umkehrung ihrer Krümmungsrichtung aufweisen.

19. Notlaufring (1) nach Anspruch 18, **dadurch gekennzeichnet, dass** die Wände (62) einen mittleren Abschnitt (65) aufweisen, der im Wesentlichen axial zwischen zwei seitlichen Abschnitten (64) verläuft, wobei diese seitlichen Abschnitte auf die Verbindungselemente (63) treffen, indem sie mit der Umfangsrichtung einen Winkel γ von 20 bis 40 Grad bilden.

20. Notlaufring (1) nach einem der Ansprüche 16 bis 19, **dadurch gekennzeichnet, dass** die Wände (52) von einem seitlichen Ende zum anderen mindestens drei Umkehrungen ihrer Krümmungsrichtung aufweisen.

21. Notlaufring (1) nach einem der Ansprüche 18 bis 20, **dadurch gekennzeichnet, dass** die Wände (32) in ihrem mittleren Bereich zwei Abschnitte (34) aufweisen, die im Wesentlichen axial verlaufen und in der Umfangsrichtung relativ zueinander versetzt sind, sowie einen dritten Verbindungsabschnitt (35).

22. Notlaufring (1) nach einem der Ansprüche 16 bis 21, **dadurch gekennzeichnet, dass** jedes Verbindungselement auf mindestens einer Seite des Tragelements (61, 81, 91) durch mindestens eine Wand (67, 87) gestützt wird, die im Wesentlichen axial zum Äußeren des ringförmigen Körpers hin verläuft.

23. Notlaufring (1) nach Anspruch 22, **dadurch gekennzeichnet, dass** jedes Verbindungselement (63) mit einer axialen Wand (67), die es stützt, und den seitlichen Enden (66) der zwei benachbarten Wände (62) eine Einheit in Form eines dreizackigen Sterns formt.

24. Notlaufring (1) nach einem der Ansprüche 16 bis 23, **dadurch gekennzeichnet, dass** das Tragelement (91) außerdem einen im Wesentlichen zylindrischen Gürtel (94) aufweist, der koaxial zum Laufring (1) ist und radial auf halber Höhe dieses Tragelements (91) angeordnet ist.

25. Notlaufring (1) nach einem der Ansprüche 16 bis 24, **dadurch gekennzeichnet, dass** das Tragelement (11) ausgelegt ist, um keine hinterschneidenden Teile aufzuweisen, die sich einer axialen Abnahme des Laufrings (1) widersetzen.

26. Montierte Einheit für Kraftfahrzeuge, umfassend eine Radfelge, einen Reifenmantel, der auf dieser Felge montiert ist, und einen Notlaufring (1), der innerhalb des Mantels auf der Felge montiert ist, um bei einem Abfall des Reifenfülldrucks eine Lauffläche des Mantels tragen zu können, wobei diese Felge an jedem ihrer zwei Umfangsränder einen Felgensitz aufweist, der dazu bestimmt ist, einen Wulst dieses Mantels aufzunehmen, wobei die Felge zwischen ihren zwei Sitzen zum einen eine Fläche und zum anderen einen Montagekragen aufweist, der diese Fläche mit einer Kante verbindet, die axial innerhalb eines dieser Sitze oder des ersten Sitzes liegt, **dadurch gekennzeichnet, dass** dieser Laufring (1) wie in einem der Ansprüche 13 bis 25 definiert ist.
